# EUROPEAN PATENT APPLICATION

(11) **EP 1 615 219 A1**
(43) Date of publication of application: **11.01.2006**
(21) Application number: 05010251.6
(22) Date of filing: 11.05.2005
(51) Int. Cl.: G11B 27/034

(54) **Creating a DVD compliant stream directly from encoder hardware**

(30) Priority: 10.06.2004 US 578288 P
(71) Applicant: Broadcom Corporation, Irvine, CA 92618-7013 (US)
(72) Inventor: Arad, Eli Irmi, 54403 Givat Smoel (IL)
(74) Representative: Jehle, Volker Armin

(57) **Abstract**

A system and method are disclosed for efficiently generating a DVD compliant stream directly from an MPEG encoder. In a preferred embodiment this is achieved by providing encoder microcode for generating a DVD standard protocol compliant stream directly from an analog signal according to DVD industry standards, such as DVD VOB. In this embodiment, the system and method of the present invention advantageously provide an encoder with the ability to generate a DVD VOB compliant stream without third party software intervention thus allowing for a more efficient and faster process for generating a DVD VOB compliant stream and for creating DVD disks from an analog source in real time. It may also be flexibly determined whether to output an MPEG compliant bit stream or a DVD VOB compliant stream or both.

## Description

### CROSS-REFERENCES TO RELATED APPLICATION

This application claims priority from U.S. provisional application No. 60/578,288 filed on June 10, 2004 by Eli Arad and entitled "Creating a DVD Compliant Stream Directly from Encoder Hardware, " which is incorporated by reference herein in its entirety.

### FIELD OF THE INVENTION

The present invention relates generally to the compression of digital video signals and DVD recording and to the design of microcode for digital video encoders. More specifically, the present invention relates to a system, method and microcode instructions for generating a DVD compliant stream directly from an MPEG encoder.

### BACKGROUND OF THE INVENTION

Development in the field of digital compression techniques and increases in the capacity of recording media are now enabling moving picture information to be compressed into digital data and recorded. DVD discs (which initials have been attributed to stand for "digital versatile disc" and "digital video disc") are commonly used as a non-volatile storage medium for storing such audio and video image data. The audio and video data are typically formatted and encoded according to industry standard protocols before being stored on a DVD disc. Such standards include DVD VOB, VideoCD, CD-I, ***MPEG-1, MPEG-2,*** CD-ROM, or CD-DA.

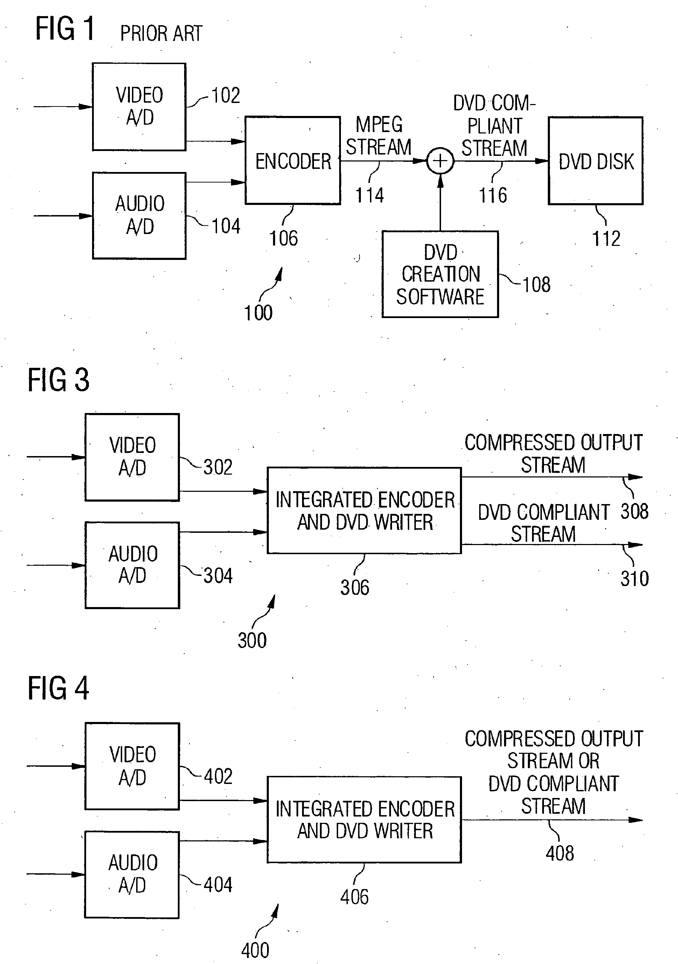

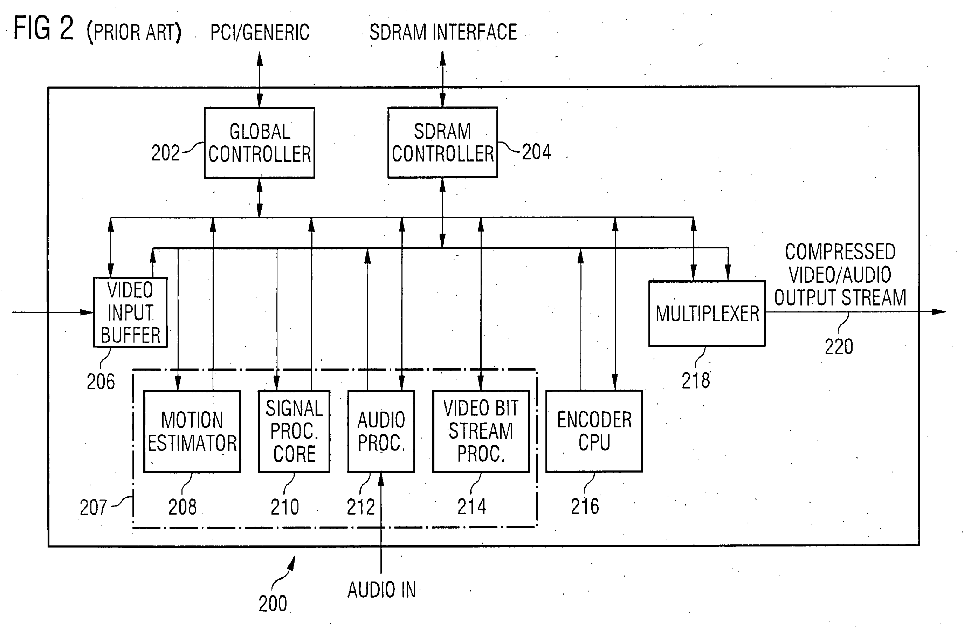

Referring now to Figure 1, there is shown a block diagram of a current prior art method for creating DVD disks. Typically, an analog signal, such as an analog signal from an antenna, a cable, a satellite receiver and the like, is converted into a digital signal by a conventional video analog-to-digital converter 102 and a conventional audio analog-to-digital converter 104 and inputted to an encoder 106. The encoder 106 then compresses the digital signal into a compliant standard format such as an MPEG-2 bit stream and outputs the MPEG complant bit stream 114. To create a DVD disk, third party DVD creation software 108 is required. The third party DVD disk software creates the various files required for creating the DVD disk, such as navigation VTS files, VMG files and the DVD VOB (MPEG-2) files. More specifically, the third party DVD disk creation software 108 takes the MPEG-2 compliant bit stream 114 as input and creates as output a DVD compliant stream 116, such as a DVD VOB compliant stream, which may then be used to create a DVD disk 112. This process is typically performed using a personal computer.

Referring now to Figure 2, there is shown a block diagram of a conventional prior art digital video encoder 200. Prior art video encoder 200 operates in accordance with video compression standards such as MPEG-2. Digital video encoder 200 comprises a global controller 202, an SDRAM controller 204, a video input buffer 206, a video/audio compressor 207, an encoder CPU 216 and a multiplexer 218. Video/audio compressor 207 further comprises a motion estimator 208, a digital signal processing core 210, an audio processor 212 and a video bitstream processor 214. Video input buffer 206 captures a video signal, which contains a current frame, or a plurality of current frames, to be encoded, and processes, accumulates and re-orders the frames according to a compression standard such as MPEG-2. The current frames are then transferred to motion estimation processor 208. Reference frames which have already been encoded may also be transferred to the motion estimation processor 208. Motion estimation processor 208 reads and compares both sets of frames, analyzes the motion of the video signal and transfers the motion analysis to digital signal processor core 210.

Digital signal processor core 210 receives the current frames and according to the motion analysis received from motion estimation processor 208, proceses and compresses the video signal. Digital signal processor 210 then transfers the compressed data to the video bitstream processor 214. Digital signal processor 210 further reconstructs the reference frame and stores it in a reference memory. Video bitstream processor 214 encodes the compressed data and transfers an encoded video bitstream to an external post-encoding memory unit via SDRAM controller 204. The external post-encoding memory unit may implement an output buffer (not shown) which stores the encoded video bitstream before it is transferred out of the encoder 200 as a compressed video output stream 220 to a target device. Encoder 200 may also contain an audio processor 212 for receiving and compressing an audio signal. The audio signal may then be multiplexed with the encoded video bitstream via multiplexer 218 and transferred out of the encoder 200 as a compressed video/audio output stream 220.

The prior art method for compressing digital signals and creating DVD disks using third party software has several disadvantages. First, it is a cumbersome process requiring several hours to build a DVD disk. Creating the DVD VOB files required for the DVD disk is the largest bottle neck in the DVD disk creation process. The creation of the DVD disk requires first a conventional digital video encoder to convert an analog signal into an MPEG compliant bitstream, and then third party software and a personal computer which can then convert the MPEG stream outputted by the conventional digital video encoder into a DVD compliant stream. The DVD disk creation software must then demultiplex the MPEG compliant stream and then remultiplex the stream into the DVD VOB format.

Another disadvantage is that the creation of the DVD disk using conventional methods is not created in real time since it is dependent upon the third party software and upon software and hardware external to the conventional digital video encoder. Because a DVD burner requires the DVD VOB stream to create the DVD disk, there is at least a several hours delay from receiving the analog signal to creating the DVD disk.

Therefore, what is needed is a system and method which creates a DVD compliant stream directly from the encoder without third party software intervention and which can create DVD disks from an analog signal faster and more efficiently. It is also desirable to have a system and method for creating a DVD disk from an analog signal in real time.

Further limitations and disadvantages of conventional and traditional approaches will become apparent to one of skill in the art, through comparison of such systems with the present invention as set forth in the remainder of the present application with reference to the drawings.

### SUMMARY OF THE INVENTION

The present invention comprises a system and method substantially as shown in and/or described in connection with at least one of the figures, as set forth more completely in the claims.

According to an aspect of the invention, a method for executing microcode instructions on an encoder for generating a DVD compliant stream directly from the encoder is provided, the method comprising the steps of:
providing the encoder with an opcode indicating instructions for generating a DVD compliant stream;
providing the encoder with input data;
performing a DVD stream generating process on the input data to create a DVD compliant stream output; and
outputting the DVD compliant stream output from the encoder.

Advantageously, the input data is a digital video signal.

Advantageously, the method is used in an MPEG encoder.

Advantageously, the method further comprises the steps of:
performing an MPEG encoding process on the input data to create an MPEG bitstream; and
selecting whether to output from the encoder the DVD compliant stream or the MPEG bitstream.

Advantageously, the DVD compliant stream output is stored in an output register until further processing.

Advantageously, the DVD compliant stream outputted from the encoder is used to create a DVD disk.

According to an aspect of the invention, a method of operating a video encoder is provided comprising:
in response to microcode instructions executable by the encoder, generating a DVD compliant stream to be outputted by the encoder.

Advantageously, the instructions receive as input a digital video signal.

Advantageously, the encoder receives instructions to generate an MPEG bitstream and instructions to select as output from the encoder either the DVD compliant stream or the MPEG bitstream.

Advantageously, the encoder is a BCM7040 or BCM7041 from Broadcom.

Advantageously, the DVD compliant stream output is stored in an output register until further processing.

Advantageously, the DVD compliant stream outputted from the encoder is used to create a DVD disk.

According to an aspect of the invention, an encoder is provided comprising:
a plurality of registers; and
at least one execution unit configured to generate a DVD compliant stream in response to microcode instructions executable by the encoder.

Advantageously, the encoder receives as input an digital video signal.

Advantageously, the encoder further comprises a selection unit for selecting as output either the DVD compliant stream or an MPEG bitstream.

Advantageously, the encoder is Broadcom's BCM7040 or BCM7041.

Advantageously, the DVD compliant stream output is stored in an output register until further processing.

Advantageously, the DVD compliant stream outputted from the encoder is used to create a DVD disk.

According to an aspect of the invention, an encoder for processing a digital video signal is provided comprising:
a compressor for compressing the digital video signal into a MPEG compliant bit stream; and
a DVD writer engine for translating the MPEG compliant bit stream into a DVD VOB compliant stream; and
a multiplexer for determining whether to output the MPEG compliant bit stream or the DVD VOB compliant stream.

Advantageously, the encoder is Broadcom's BCM7040 or BCM7041.

Advantageously, the DVD compliant stream output is stored in an output register until further processing.

Advantageously, the DVD compliant stream outputted from the encoder is used to create a DVD disk.

### BRIEF DESCRIPTION OF SEVERAL VIEWS OF THE DRAWINGS

The accompanying drawings, which are incorporated herein and form a part of the specification, illustrate the present invention and, together with the description, further serve to explain the principles of the invention and to enable a person skilled in the pertinent art to make and use the invention.
Figure 1 illustrates a block diagram of a prior art system for creating DVDs.
Figure 2 illustrates a block diagram of a prior art encoder.
Figure 3 illustrates a block diagram of a system using an integrated encoder and DVD writer in accordance with one embodiment of the present invention.
Figure 4 illustrates a block diagram of a system using an integrated encoder and DVD writer in accordance with another embodiment of the present invention.
Figure 5 illustrates a block diagram of an integrated encoder and DVD writer in accordance with one embodiment of the present invention.

### DETAILED DESCRIPTION OF THE INVENTION

The present invention will now be described in detail with reference to a few preferred embodiments thereof as illustrated in the accompanying drawings. In the following description, numerous specific details are set forth in order to provide a thorough understanding of the present invention. It will be apparent, however, to one skilled in the art, that the present invention may be practiced without some or all of these specific details. In other instances, well known processes and steps have not been described in detail in order not to unnecessarily obscure the present invention.

The invention generally pertains to a novel encoder for generating a DVD compliant stream from an analog signal. The present invention directly implements both a DVD VOB compliant stream and an MPEG compliant stream. In a preferred embodiment of the invention, this is achieved by providing microcode to be run by the integrated encoder and DVD writer of the present invention to generate a DVD VOB compliant stream directly from an analog signal according to the DVD VOB standards. In this embodiment, the system and method of the present invention advantageously provide an encoder with the ability to generate a DVD VOB compliant stream without third party software intervention thus allowing for a more efficient and faster process for generating a DVD VOB compliant stream and for creating DVD disks from an analog source in real time. The present invention also advantageously provides great flexibility in determining the output format for the inputted analog stream. For example, in one embodiment, the present invention may flexibly determine whether to output an MPEG compliant bit stream or a DVD VOB compliant stream or both.

Embodiments of the invention are discussed below with references to Figures 3 to 5. However, those skilled in the art will readily appreciate that the detailed description given herein with respect to these figures is for explanatory purposes as the invention extends beyond these limited embodiments.

Referring now to Figure 3, there is shown a block diagram of a system 300 using an integrated encoder and DVD writer in accordance with one embodiment of the present invention. In a preferred embodiment, the integrated encoder and DVD writer system comprises a BCM7040 or BCM7041 produced by Broadcom Corporation of Irvine, California. System 300 comprises a video analog-to-digital converter 302, an audio analog-to-digital converter 304, and an integrated encoder and DVD writer 306. In this embodiment, an analog signal such as an analog signal from an antenna, a cable, a video camera or the like is inputted to the video analog-to-digital converter 302 and the audio analog-to-digital converter 304 and converted into a digital signal. The digital signal is then inputted into the integrated encoder and DVD writer 306. One skilled in the art will realize that the present invention is not limited to inputting a digital signal into the integrated encoder and DVD writer 306, but that the video analog-to-digital converter 302 and the audio analog-to-digital converter 304 may be intergated within the integrated encoder and DVD writer 306 thereby allowing an analog signal to be inputted directly to the integrated encoder and DVD writer 306. The integrated encoder and DVD writer 306 then converts the digital video and audio signal into an MPEG compliant bit stream 308 and a DVD compliant stream 310 which may then be outputted directly from the integrated encoder and DVD writer 306 for further processing or storage. Thus, the present invention advantageously provides a system and method for generating a DVD compliant stream directly from an analog input signal which can then be outputted from the integrated encoder and DVD writer. The present invention also advantageously provides a system and method for generating a DVD compliant stream in real time.

Referring now to Figure 4, there is shown a block diagram of a system 400 using an integrated encoder and DVD writer 406 in accordance with another embodiment of the present invention. In this embodiment, the integrated encoder and DVD writer 406 selects as a single output 408 either the MPEG compliant stream or the DVD compliant stream. More specifically, system 400 comprises a video analog-to-digital converter 402, an audio analog-to-digital converter 404, and an integrated encoder and DVD writer 406. In a preferred embodiment, the integrated encoder and DVD writer system comprises a BCM7040 or BCM7041 produced by Broadcom Corporation of Irvine, California. In this embodiment, an analog signal such as an analog signal from an antenna, a cable, a video camera or the like is inputted to the video analog-to-digital converter 402 and the audio analog-to-digital converter 404 and converted into a digital signal. The digital signal is then inputted into the integrated encoder and DVD writer 406. One skilled in the art will realize that the present invention is not limited to inputting a digital signal into the integrated encoder and DVD writer 406, but that the video analog-to-digital converter 402 and the audio analog-to-digital converter 404 may be intergated within the integrated encoder and DVD writer 406 thereby allowing an analog signal to be inputted directly to the integrated encoder and DVD writer 406. The integrated encoder and DVD writer then converts the digital video and audio signal into an MPEG compliant bit stream and a DVD VOB stream which may then be outputted directly from the integrated encoder and DVD writer 406. The integrated encoder and DVD writer 406 further comprises an output controller or selector (not shown) which can then select or regulate which output stream 408, either the MPEG stream or the DVD VOB stream, is outputted from the integrated encoder and DVD writer 406. In yet another embodiment, the integrated encoder and DVD writer 406 may not automatically generate a DVD compliant stream, but may wait til receiving specific instructions for generating a DVD compliant stream. The present invention may also output either the DVD compliant stream or the MPEG stream for further processing or storage. Thus, the present invention advantageously provides great flexibility in determining the output format for the inputted analog stream.

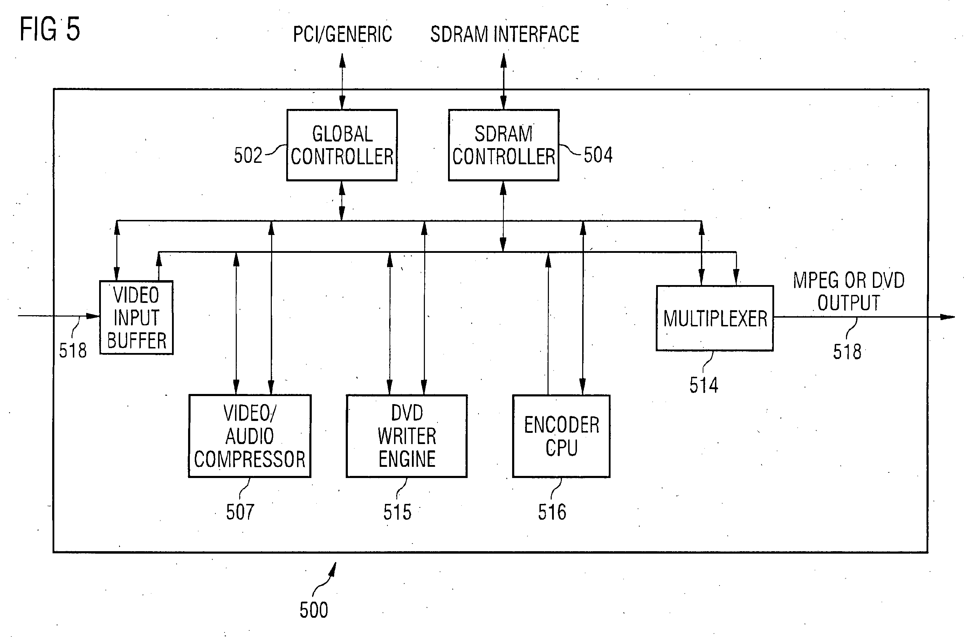

Referring now to Figure 5, there is shown a block diagram of an integrated encoder and DVD writer in accordance with one embodiment of the present invention. In a preferred embodiment, the integrated encoder and DVD writer 500 compresses a digital video signal in accordance with MPEG-2 video compression standards and converts the compressed MPEG-2 compliant bitstream into a DVD compliant bitstream in accordance with a DVD industry standard protocol such as DVD VOB. Integrated encoder and DVD writer 500 comprises a global controller 502, an SDRAM controller 504, a video input buffer 506, a video/audio compressor 507, a DVD writer engine 515, an integrated encoder and DVD writer CPU 516 and a multiplexer 514. Video/audio compressor 507 may further comprise a motion estimator, a digital signal processing core, an audio processor and a video bitstream processor for compressing the received input signal.

. Video input buffer 506 captures an input video signal 518, which contains a current frame, or a plurality of current frames, to be encoded, and processes, accumulates and re-orders the frames according to the standard required for the MPEG compression scheme. The current frames are then transferred to the video/audio compressor 507 where the digital video signal is compressed in accordance with a compression standard such as MPEG-2.

The MPEG compliant bitstream may then be transferred to the DVD writer or translator engine 515 which then converts or translates the MPEG compliant bitstream into a DVD compliant stream, such as a DVD VOB compliant stream. Thus, the DVD writer engine 515 directly implements the DVD VOB conversion process for the integrated encoder and DVD writer 500. This unit may be instantiated separately within the integrated encoder and DVD writer 500 or may be integrated within another unit such as integrated encoder and DVD writer CPU 516. In a preferred embodiment, integrated encoder and DVD writer CPU 516 comprises microcode for creating a compliant DVD VOB stream from the compressed video/audio output stream. In another embodiment, multiplexer 514 may select either the MPEG compliant bitstream or the DVD VOB compliant stream as the output 520 of the integrated encoder and DVD writer 500.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method for executing microcode instructions on an encoder for generating a DVD compliant stream directly from the encoder, the method comprising the steps of:
providing the encoder with an opcode indicating instructions for generating a DVD compliant stream;
providing the encoder with input data;
performing a DVD stream generating process on the input data to create a DVD compliant stream output; and
outputting the DVD compliant stream output from the encoder.

2. The method of claim 1 wherein the input data is a digital video signal.

3. The method of claim 1 wherein the method is used in an MPEG encoder.

4. The method of claim 1 further comprising the steps of:
performing an MPEG encoding process on the input data to create an MPEG bitstream; and
selecting whether to output from the encoder the DVD compliant stream or the MPEG bitstream.

5. A method of operating a video encoder comprising:
in response to microcode instructions executable by the encoder, generating a DVD compliant stream to be outputted by the encoder.

6. The method of claim 5 wherein the instructions receive as input a digital video signal.

7. An encoder comprising:
a plurality of registers; and
at least one execution unit configured to generate a DVD compliant stream in response to microcode instructions executable by the encoder.

8. The encoder of claim 7 wherein the encoder receives as input an digital video signal.

9. The encoder of claim 7 further comprising a selection unit for selecting as output either the DVD compliant stream or an MPEG bitstream.

10. An encoder for processing a digital video signal comprising:
a compressor for compressing the digital video signal into a MPEG compliant bit stream; and
a DVD writer engine for translating the MPEG compliant bit stream into a DVD VOB compliant stream; and
a multiplexer for determining whether to output the MPEG compliant bit stream or the DVD VOB compliant stream.
